# EUROPEAN PATENT APPLICATION

(11) **EP 4 614 468 A1**
(43) Date of publication of application: **10.09.2025**
(21) Application number: 23884986.3
(22) Date of filing: 01.11.2023
(51) Int. Cl.: G07C 9/00, B60R 25/20

(54) **OPERATING METHOD, OPERATING DEVICE, AND COMPUTER-READABLE STORAGE MEDIUM**

(30) Priority: 03.11.2022 CN 202211369662
(71) Applicant: Boe Technology Group Co., Ltd., Beijing 100015 (CN); Beijing BOE Technology Development Co., Ltd., Beijing 100176 (CN)
(72) Inventor: FENG, Hongbo, Beijing 100176 (CN); ZHAO, Junjie, Beijing 100176 (CN); SU, Jing, Beijing 100176 (CN); CHEN, Shaobei, Beijing 100176 (CN)
(74) Representative: Brötz, Helmut
(86) International application number: PCT/CN2023/129047
(87) International publication number: WO 2024/094060

(57) **Abstract**

An operating method, an operating device, and a computer-readable storage medium. The operating method is applied to a first object, and comprises: acquiring determining information; on the basis of the determining information, determining whether the first object is in a first environment; and in response to the first object being in the first environment, executing an environment operating rule corresponding to the first environment.

## Description

The present application claims priority to Chinese Patent Application No. 202211369662.7, filed on November 03, 2022, the entire contents of which are incorporated herein by reference as part of the present application.

### TECHNICAL FIELD

Embodiments of the present disclosure relate to an operation method, an operation apparatus, and a computer-readable storage medium.

### BACKGROUND

The digital key is an innovative technology under the transformation of automobile intelligence. Through accurate positioning technology, near-field communication technology such as NFC (Near Field Communication) and more secure key management, the digital key allows the owner to control the vehicle through smartphones, NFC smart cards, wearable devices (e.g., smart watches, smart bracelets, etc.) and the like, to perform relative contactless operation on the vehicle , such as keyless entry and start, remote key authorization for others, personalized vehicle settings, and other comfortable and convenient experience to improve the convenience of vehicle use.

### SUMMARY

At least one embodiment of the present disclosure provides an operation method, which is applied to a first object and comprises: acquiring judgement information; judging whether the first object is in a first environment based on the judgement information; and in response to the first object being in the first environment, executing an environment operation rule corresponding to the first environment.

For example, in the operation method provided by at least one embodiment of the present disclosure, an environment communication module is provided in the first environment, the acquiring judgement information comprises: sending a first request to the environment communication module; receiving a first response sent by the environment communication module. The judgement information comprises the first response.

For example, in the operation method provided by at least one embodiment of the present disclosure, a second object is provided in the first environment, and the environment communication module is arranged on the second object, the judging whether the first object is in a first environment based on the judgement information comprises: in response to the first response indicating that a connection is established between the first object and the second object, determining that the first object is in the first environment; in response to the first response indicating that no connection is established between the first object and the second object, determining that the first object is not in the first environment.

For example, in the operation method provided by at least one embodiment of the present disclosure, the second object comprises at least one electronic device.

For example, in the operation method provided by at least one embodiment of the present disclosure, the second object comprises at least one sensing node, and the at least one sensing node establishes a node sensing range, the first object is at least partially located within the node sensing range, the first response indicates that a connection is established between the first object and the second object; the first object is located outside the node sensing range, the first response indicates that no connection is established between the first object and the second object.

For example, in the operation method provided by at least one embodiment of the present disclosure, a second object is provided in the first environment, and the environment communication module is arranged on the second object, the judging whether the first object is in a first environment based on the judgement information comprises: in response to the first response indicating that the first object is connected to an environment network created by the second object, determining that the first object is in the first environment; in response to the first response indicating that the first object is not able to be connected to the environment network created by the second object, determining that the first object is not in the first environment.

For example, in the operation method provided by at least one embodiment of the present disclosure, the first object and the second object support the same network connection protocol.

For example, in the operation method provided by at least one embodiment of the present disclosure, the acquiring judgement information comprises: acquiring a distance between the first object and the first environment; and generating the judgement information based on the distance and a distance threshold.

For example, in the operation method provided by at least one embodiment of the present disclosure, the acquiring a distance between the first object and the first environment comprises: acquiring an object position of the first object; acquiring an environment position corresponding to the first environment; and determining the distance based on the object position and the environment position.

For example, in the operation method provided by at least one embodiment of the present disclosure, an environment communication module is provided in the first environment, the acquiring a distance between the first object and the first environment comprises: sending a distance acquisition request to the environment communication module; receiving a distance acquisition response fed back by the environment communication module, the distance acquisition response comprising response time; and determining the distance based on receiving time for receiving the distance acquisition response, sending time for sending the distance acquisition request, and the response time.

For example, in the operation method provided by at least one embodiment of the present disclosure, the judging whether the first object is in a first environment based on the judgement information, comprises: in response to the judgement information indicating that the distance is less than the distance threshold, determining that the first object is in the first environment; and in response to the judgement information indicating that the distance is greater than or equal to the distance threshold, determining that the first object is not in the first environment.

For example, in the operation method provided by at least one embodiment of the present disclosure, a second object is provided in the first environment, the second object comprises an electronic device and at least one sensing node, the environment communication module comprises a first sub-communication module arranged on the electronic device and a second sub-communication module arranged on the at least one sensing node, and the first response comprises a first sub-response sent by the first sub-communication module and a second sub-response sent by the second sub-communication module, the judging whether the first object is in a first environment based on the judgement information, comprises: in response to the first sub-response indicating that a connection is established between the first object and the electronic device and the second sub-response indicating that a connection is established between the first object and the at least one sensing node, determining that the first object is in the first environment and is located in an internal region corresponding to the first environment; in response to the first sub-response indicating that a connection is established between the first object and the electronic device and the second sub-response indicating that no connection is established between the first object and the at least one sensing node, determining that the first object is in the first environment and is located in an external region corresponding to the first environment; and in response to the first response indicating that no connection is established between the first object and the electronic device, determining that the first object is not in the first environment.

For example, in the operation method provided by at least one embodiment of the present disclosure, the executing an environment operation rule corresponding to the first environment comprises: in response to the first object being in the internal region corresponding to the first environment, executing an internal operation rule corresponding to the internal region; in response to the first object being in the external region corresponding to the first environment, executing an external operation rule corresponding to the external region; the environment operation rule comprises the internal operation rule and the external operation rule, and the internal operation rule and the external operation rule are at least partially different.

For example, in the operation method provided by at least one embodiment of the present disclosure, a working mode of a control element corresponding to the first object is a contactless operation mode, the control element corresponds to at least one working region, and the contactless operation mode comprises at least one sensing operation corresponding to the at least one working region one by one; the executing an environment operation rule corresponding to the first environment, comprises: controlling the at least one sensing operation and/or a range of the at least one working region.

For example, in the operation method provided by at least one embodiment of the present disclosure, the at least one working region comprises a first working region, and the at least one sensing operation comprises a first sensing operation corresponding to the first working region, the controlling the at least one sensing operation and/or a range of the at least one working region, comprises: narrowing the range of the first working region and/or turning off the first sensing operation.

For example, in the operation method provided by at least one embodiment of the present disclosure, the at least one working region further comprises a second working region, and the at least one sensing operation comprises a second sensing operation corresponding to the second working region, a maximum distance between the first working region and the first object is a first distance, a maximum distance between the second working region and the first object is a second distance, and the first distance is less than the second distance, the controlling the at least one sensing operation and/or a range of the at least one working region, further comprises: narrowing the range of the second working region and/or turning off the second sensing operation.

For example, in the operation method provided by at least one embodiment of the present disclosure, the at least one working region further comprises a third working region, and the at least one sensing operation comprises a third sensing operation corresponding to the third working region, a maximum distance between the first working region and the first object is a first distance, a maximum distance between the third working region and the first object is a third distance, and the first distance is greater than the third distance, the controlling the at least one sensing operation and/or a range of the at least one working region, further comprises: narrowing the range of the third working region and/or turning off the third sensing operation.

For example, in the operation method provided by at least one embodiment of the present disclosure, the first object comprises a vehicle provided with an object communication module.

For example, in the operation method provided by at least one embodiment of the present disclosure, the first environment comprises at least one of: a home environment, an office environment, and a camping environment.

For example, the operation method provided by at least one embodiment of the present disclosure further comprises: matching the first object and the first environment before acquiring the judgement information.

For example, in the operation method provided by at least one embodiment of the present disclosure, an environment communication module is provided in the first environment, the acquiring judgement information comprises: receiving a second request sent by the environment communication module; generating and sending a second response to the environment communication module based on the second request; and acquiring the judgement information sent by the environment communication module based on the second response.

At least one embodiment of the present disclosure provides an operation method, applied to a second object, the second object is located in a first environment, and the operation method comprises: receiving a first request sent by a first object; based on the first request, generating and sending a first response to the first object such that the first object judges whether the first object is in the first environment based on the first response, and in response to the first object being in the first environment, the first object executes an environment operation rule corresponding to the first environment.

At least one embodiment of the present disclosure provides an operation method, applied to a first object and a second object, the second object is located in a first environment, and the operation method comprises: the first object sending a first request to the second object; based on the first request, the second object generating and sending a first response to the first object; the first object judging whether the first object is in the first environment based on the first response, and in response to the first object being in the first environment, the first object executing an environment operation rule corresponding to the first environment.

At least one embodiment of the present disclosure provides an operation apparatus, comprising: a memory, for storing computer-readable instructions in a non-transitory manner; and a processor, for running the computer-readable instructions. When the computer-readable instructions are run by the processor, the operation method according to any one embodiment of the present disclosure is executed.

At least one embodiment of the present disclosure provides a computer-readable storage medium, storing computer-readable instructions in a non-transitory manner. The computer-readable instructions, when executed by a computer, cause the computer to perform the operation method according to any one embodiment of the present disclosure.

### BRIEF DESCRIPTION OF DRAWINGS

In order to more clearly illustrate the technical solutions of the embodiments of the present disclosure, the drawings of the embodiments will be briefly described in the following; it is obvious that the described drawings in the following are only related to some embodiments of the present disclosure and thus are not intended to limit the present disclosure.
Fig. 1 is a schematic diagram of respective working regions corresponding to a digital key according to at least one embodiment of the present disclosure;
Fig. 2 is a schematic flowchart of an operation method provided by at least one embodiment of the present disclosure;
Fig. 3A is a schematic diagram of establishing a connection between an automobile and a smart home device provided by at least one embodiment of the present disclosure;
Fig. 3B is a schematic diagram showing that no connection is established between an automobile and a smart home device provided by at least one embodiment of the present disclosure;
Fig. 4A is a schematic diagram of a node sensing range provided by at least one embodiment of the present disclosure;
Fig. 4B is a schematic diagram of another node sensing range provided by at least one embodiment of the present disclosure;
Fig. 5A is a schematic diagram of a position between a node sensing range and a home environment provided by at least one embodiment of the present disclosure;
Fig. 5B is a schematic diagram of a position between another node sensing range and a home environment provided by at least one embodiment of the present disclosure;
Fig. 6A is a schematic diagram illustrating an automobile accessing to a home network provided by at least one embodiment of the present disclosure;
Fig. 6B is a schematic diagram illustrating an automobile not accessing to a home environment provided by at least one embodiment of the present disclosure;
Fig. 7A is a schematic diagram illustrating an automobile being in a home environment provided by at least one embodiment of the present disclosure;
Fig. 7B is a schematic diagram illustrating an automobile being not in a home environment provided by at least one embodiment of the present disclosure;
Fig. 8A is a schematic diagram illustrating an automobile being in an internal region corresponding to a home environment provided by at least one embodiment of the present disclosure;
Fig. 8B is another schematic diagram illustrating an automobile being in an internal region corresponding to a home environment provided by at least one embodiment of the present disclosure;
Fig. 8C is a schematic diagram illustrating an automobile being in an external region corresponding to a home environment provided by at least one embodiment of the present disclosure;
Fig. 8D is another schematic diagram illustrating an automobile being in an external region corresponding to a home environment provided by at least one embodiment of the present disclosure;
Fig. 9 is a schematic diagram of a plurality of working regions corresponding to a control element of a first object provided by at least one embodiment of the present disclosure;
Figs. 10A-10E are schematic diagrams of respective working regions under various environment operation rules provided by at least one embodiment of the present disclosure;
Fig. 11A is a schematic flowchart of an operation method provided by at least one embodiment of the present disclosure;
Fig. 11B is a schematic flowchart of another operation method provided by at least one embodiment of the present disclosure;
Fig. 12 is a schematic diagram of another operation method provided by at least one embodiment of the present disclosure;
Fig. 13 is a schematic diagram of yet another operation method provided by at least one embodiment of the present disclosure;
Fig. 14 is a schematic diagram of an operation apparatus provided by at least one embodiment of the present disclosure; and
Fig. 15 is a schematic diagram of a computer-readable storage medium provided by at least one embodiment of the present disclosure.

### DETAILED DESCRIPTION

In order to make objects, technical solutions, and advantages of the embodiments of the present disclosure more apparent, the technical solutions of the embodiments of the present disclosure will be described in a clearly and fully understandable way in connection with the drawings related to the embodiments of the present disclosure. Apparently, the described embodiments are just a part but not all of the embodiments of the present disclosure. Based on the described embodiments of the present disclosure herein, those skilled in the art can obtain other embodiment(s), without any inventive work, which should be within the scope of the present disclosure.

Unless otherwise defined, all the technical and scientific terms used in the present disclosure should have the same meanings as commonly understood by one of ordinary skill in the art to which the present disclosure belongs. The terms "first," "second," etc., which are used in the present disclosure, are not intended to indicate any sequence, amount, or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the absolute position of the object which is described is changed, the relative position relationship may also be changed accordingly.

In order to make the following description of the embodiments of the present disclosure clear and concise, the present disclosure omits detailed description of some known functions and some known components.

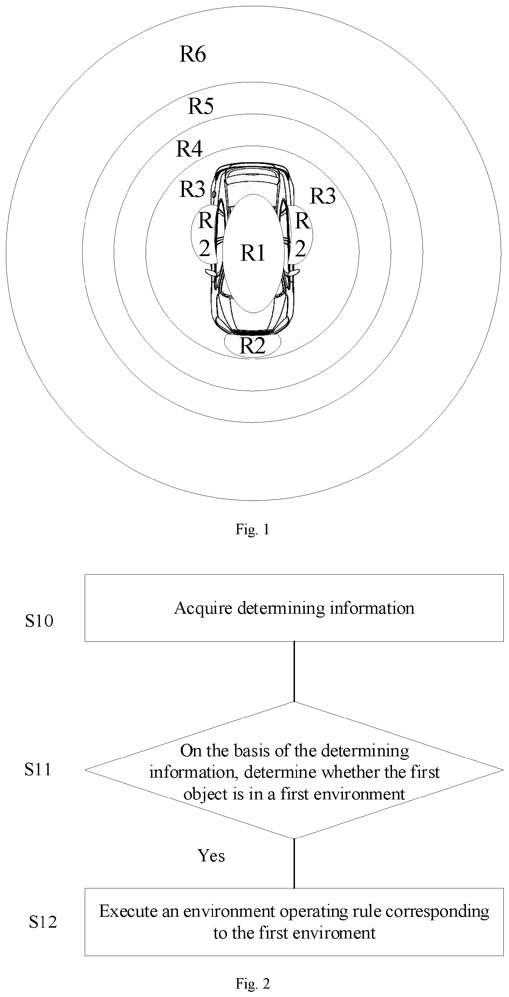

Ranging and positioning is an important part of digital key system, and provides users with a more intelligent and better functional experience through accurate positioning algorithm technology. Based on a distance between the digital key and the vehicle, respective working regions R1-R6 corresponding to the digital key are schematically shown with reference to Fig. 1, and the working regions R4-R6 can be annular regions. The corresponding functions of the respective working regions R1-R6 are as shown in Table 1. The values in Table 1 are for reference by the user and the functions of some or all of the regions can be selected to be implemented according to the functional demands of the vehicle, meanwhile, other undefined functional regions can be defined by the user himself, and the values in Table 1 can be adjusted according to actual demands. The implementation of specific ranging techniques and positioning algorithms is not limited in the present disclosure and can be implemented by the user himself.

**Table 1**

| Working region | Distance between digital key and vehicle (unit: meter) | Function |
|---|---|---|
| R1 | In-vehicle | Vehicle starting |
| R2 | ≤ 2 | Passive entry function |
| R3 | ≤ 3 | Unlocking |
| R4 | 5~10 | Locking |
| R5 | 8~15 | Welcome function |
| R6 | ≥ 30 | Connection, authentication |

The welcome function can include functions such as an automobile welcome light, a welcome seat, etc. For example, the automobile welcome light function means that when a driver or a passenger is ready to get into the automobile, the moment of opening a door, the welcome light located at the bottom of the door momentarily lights up, illuminates the ground, which makes people feel sense of being welcomed home; when closing the door, the welcome light located at the bottom of the door is turned off instantly. The welcome seat function refers to a functional seat that automatically returns to a comfortable position when the engine starts the vehicle in an adaptive cruise control (ACC) or on state, so as to give the driver more space for getting in and out of the automobile.

For example, the ranging and positioning can be implemented by Bluetooth positioning, and the Bluetooth vehicle key is a digital key based on TEE (Trusted Execution Environment), taking the Bluetooth vehicle key as an example, the digital key system can include a Bluetooth master node, a Bluetooth auxiliary node, etc., the Bluetooth master node is used for establishing a Bluetooth communication link between the vehicle and the mobile terminal device in the digital key system, and is responsible for data transmission between the vehicle and the mobile terminal device, and at the same time, the Bluetooth master node can cooperate with the implementation of the positioning algorithm. In the digital key system, the Bluetooth auxiliary node mainly cooperate with the implementation of the positioning algorithm to provide users with a better contactless function experience. Whether there is a need for the Bluetooth auxiliary node and the number of the Bluetooth auxiliary node(s) can be set by the user himself from the aspects of functional demands and positioning accuracy requirements, etc.

The principle of Bluetooth positioning primarily relies on the Bluetooth signal field strength value (received signal strength indication, RSSI). The Bluetooth signal field strength value is related to the distance. The closer the distance is, the larger the Bluetooth signal field strength value is. The farther the distance is, the smaller the Bluetooth signal field strength value is. However, because the frequency of the Bluetooth signal is relatively high, about 2.4 HGz, this determines a physical characteristic of the Bluetooth signal: when the distance is relatively close, the Bluetooth signal field strength value changes greatly, and there is a near-linear relationship between the Bluetooth signal field strength value and the distance. However, when the distance is relatively long, for example, 1.5 meters away, the change in the Bluetooth signal field strength value is relatively small, and in this case, the change in the distance cannot be accurately recognized.

For example, the ranging and positioning can be implemented through UWB (ultra wideband) positioning, UWB is also known as ultra-wideband technology, and is a wireless carrier communication technology that uses frequency bandwidths above 1 GHz. The UWB technology uses time of flight for ranging. In the automobile, the UWB anchor can implement the ranging functionality of the digital key and the automobile body. In the time of flight ranging, after the transmitting end transmits the signal containing the time stamp, the receiving end calculates the time-of-flight through the received information, and then calculates the flight distance to achieve accurate ranging. According to the combination of distances between the digital key and respective anchor points in the automobile, the comprehensive calculation is performed, in this case, the automobile-end system on the automobile can obtain the accurate region or position of the digital key in real time, and the positioning accuracy of UWB can reach centimeter level.

Different regions around the vehicle can be set as a connection region, a welcome region, an unlocking region, etc.; for example, as shown in Fig. 1, a working region R3 can be an unlocking region, a working region R5 can be a welcome region, a working region R6 can be a connection region, etc.; when a user carrying a digital key walks into different regions, the vehicle can judge the intention of the user to use the vehicle and execute operations such as connection, welcoming, unlocking, etc. For example, as a user carrying a digital key approaches the vehicle, the vehicle recognizes the user's identity and execute the functions such as automatically turning on the welcome light, unlocking the vehicle, adjusting the seat to the user's preferred position, etc.

Because the vehicle is movable, the vehicle can be in different environments at different times, and the demands for the contactless operation of the vehicle are different in different environments, for example, in a home environment, the digital key is located at home, and the distance between the digital key and the vehicle can be within an effective connection range, which can resulting in triggering the vehicle to perform functions such as welcoming and unlocking, while these operations are operations that the user does not wish the vehicle to execute in the current home environment.

At least one embodiment of the present disclosure provides an operation method applied to a first object and includes: acquiring judgement information; judging whether the first object is in a first environment based on the judgement information; in response to the first object being in the first environment, executing an environment operation rule corresponding to the first environment.

Embodiments of the present disclosure provide a contactless operation method, and more particularly, relate to a contactless operation method in a specific environment, the operation method includes controlling the first object to execute a contactless operation rule (e.g., turning off the contactless operation, controlling the range of the contactless operation, etc.) related to the environment in which the first object is located through determining the environment in which the first object is located, so as to make the contactless operation of the first object closer to the requirements of the specific environment, satisfying the contactless operation requirements of the first object in different environments, improving the intelligent and contactless control for the first object, and improving the user experience.

At least one embodiment of the present disclosure also provides an operation apparatus and a computer-readable storage medium corresponding to the above-mentioned operation method.

The embodiments of the present disclosure are described in detail below with reference to the accompanying drawings. However, the present disclosure is not limited to these specific embodiments.

Fig. 2 is a schematic flowchart of an operation method provided by at least one embodiment of the present disclosure.

At least one embodiment of the present disclosure provides an operation method, the operation method is applied to a first object. For example, the first object includes a vehicle provided with an object communication module. The object communication module can include a sending module and a receiving module to enable interaction of the first object with an external device. Vehicles can include motor vehicles, bicycles, etc., and the motor vehicles can include automobiles (fuel-powered automobiles, electric automobiles, etc.), motorcycles, motor tricycles, etc. Unless otherwise specified, the embodiments of the present disclosure are described by taking the first object as an automobile as an example. However, the present disclosure is not limited thereto, and the first object can be a motorcycle or the like according to actual application scenarios and application demands.

For example, the operation method can be executed by a processor or a computer or the like, and when the first object is an automobile, the operation method can be executed by a vehicle-mounted device of the automobile.

For example, as shown in Fig. 2, the operation method includes the following steps S10 to S12.

Step S10: acquiring judgement information.

Step S11: judging whether the first object is in a first environment based on the judgement information.

In response to the first object being in the first environment, i.e., the "yes" branch, step S12 is executed: executing an environment operation rule corresponding to the first environment.

For example, the first environment can include at least one selected from the group comprising a home environment, an office environment, a camping environment, and the like, although the present disclosure is not limited in this respect. In the embodiments of the present disclosure, unless otherwise specified, the first environment is described as a home environment.

For example, in some embodiments, an environment communication module is provided in the first environment, and the environment communication module can include a receiving module and a transmitting module. For example, the object communication module of the first object can communicate with the environment communication module in the first environment so as to achieve information interaction between the first object and the first environment, for example, acquiring the judgement information. In this case, step S10 can include: sending a first request to the environment communication module; receiving a first response sent by the environment communication module. For example, the judgement information includes the first response.

For example, the first object can automatically send the first request based on a request trigger condition, the request trigger condition can be an event trigger condition, etc., for example, the event trigger condition can be that the first object stops running (for example, the time period of stop running exceeds a time threshold, etc.), the first object enters an environment region corresponding to the first environment, etc.; the first object can also send the first request based on an instruction from the user, for example, the user can issue the instruction via the vehicle-mounted device of the automobile or a digital key of the automobile (e.g., an application of a smart phone, a Bluetooth digital key, a NFC digital key, etc.).

After the environment communication module receives the first request, the environment communication module can process based on the first request to generate a corresponding first response.

For example, the environment communication module and the object communication module can communicate with each other via wireless communication, and the embodiments of the present disclosure are not limited in this respect. The wireless communication can include a network or the like, the network can include a local area network, the Internet, a telecommunications network, the Internet of Things based on Internet and/or telecommunications network, and/or any combination of the above networks. The network can include a wireless network, and the wireless network can employ, for example, a 3G/4G/5G mobile communication network, Bluetooth, Zigbee, WiFi, or other communication modes. The present disclosure does not limit the type and function of the network.

For example, the specific forms of the first request and the first response can be set according to actual situations, and the embodiments of the present disclosure are not limited thereto.

For example, in some embodiments, a second object is provided in the first environment and the environment communication module is arranged on the second object, and step **S11** can include: in response to the first response indicating that a connection is established between the first object and the second object, determining that the first object is in the first environment; and in response to the first response indicating that no connection is established between the first object and the second object, determining that the first object is not in the first environment.

For example, the first object and the second object support the same network connection protocol, e.g., the network connection protocol can be the Matter protocol.

For example, in some embodiments, the second object can include at least one electronic device, etc., and when the first object can discover or connect or control the at least one electronic device, the first response indicates that a connection is established between the first object and the second object, for example, in some examples, when the first object establishes the connection with a plurality of electronic devices (e.g., 2 or 3, etc.) in the first environment, the first response indicates that a connection is established between the first object and the second object, so that the accuracy of the judgement can be improved, and the occurrence of the incorrect connection to cause the relevant operation to be executed incorrectly can be avoided. When the first object is unable to discover or connect or control any of the at least one electronic device, that is, the first object cannot establish a connection with any of all electronic devices in the first environment, the first response indicates that no connection is established between the first object and the second object.

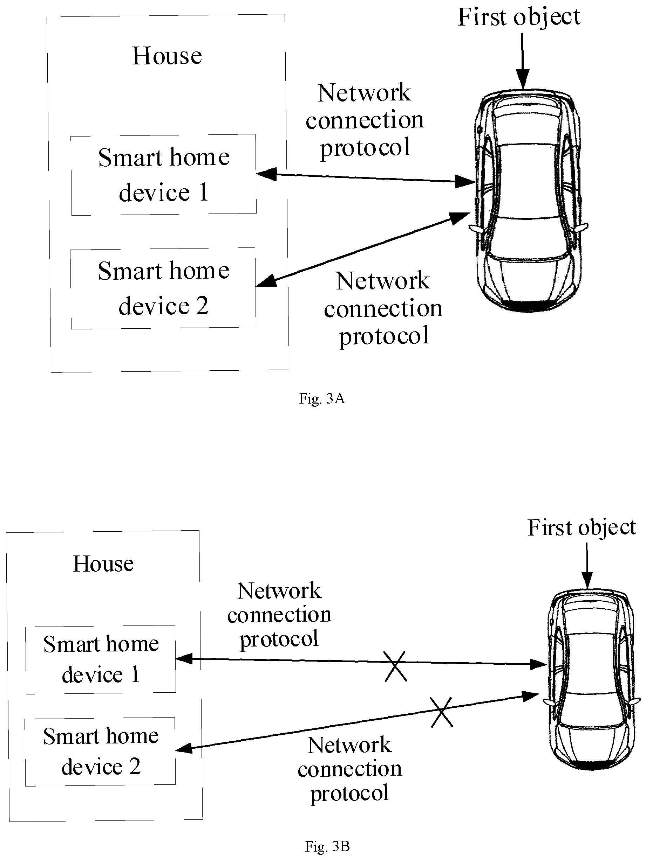

Fig. 3A is a schematic diagram of establishing a connection between an automobile and a smart home device provided by at least one embodiment of the present disclosure; Fig. 3B is a schematic diagram showing that no connection is established between an automobile and a smart home device provided by at least one embodiment of the present disclosure.

For example, when the first environment is a home environment, the electronic device can be a smart home device, such as a smart television, a smart refrigerator, a smart door lock, and the like. In embodiments of the present disclosure, it is determined whether the first object is in the first environment by judging whether the first object can be connected to the smart home device. For example, when an automobile and a smart home device support the same network connection protocol (such as a Matter protocol), the automobile and the smart home device can perform device discovery, device connection, device control, and the like operations via the Matter protocol, as shown in Figs. 3A and 3B, a plurality of smart home devices can be included in a house, and the plurality of smart home devices can include a smart home device 1 (for example, a smart refrigerator) and a smart home device 2 (for example, a smart television), as shown in Fig. 3A, in one example, when an automobile can discover/connect/control at least one smart home device (smart home device 1 and/or smart home device 2) in a house via a network connection protocol supported by the smart home device, it indicates that the automobile is already in a home environment; as shown in Fig. 3B, in another example, when an automobile cannot discover/connect/control any smart home device in a house through a network connection protocol supported by the smart home device, it means that the automobile is not in a home environment.

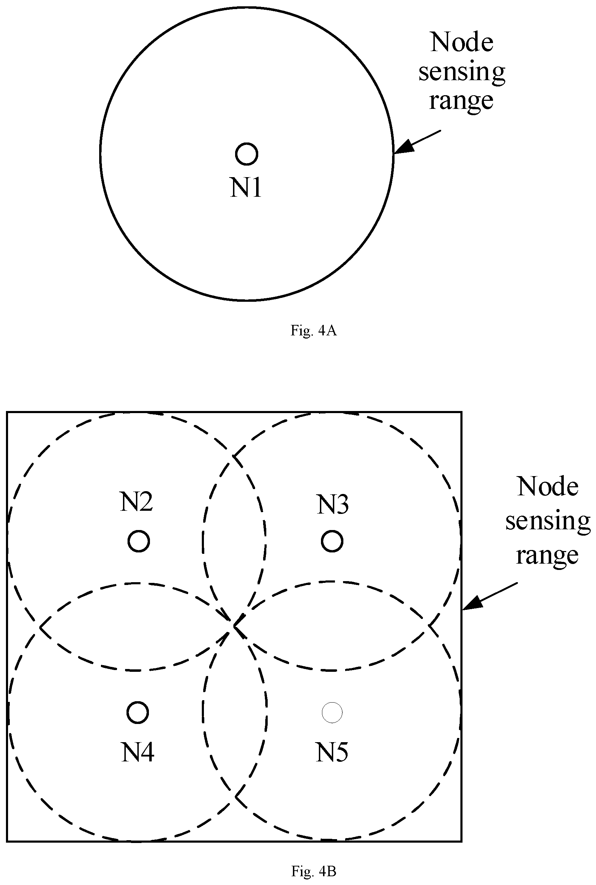

Fig. 4A is a schematic diagram of a node sensing range provided by at least one embodiment of the present disclosure, Fig. 4B is a schematic diagram of another node sensing range provided by at least one embodiment of the present disclosure.

For example, in some embodiments, the second object includes at least one sensing node, the at least one sensing node establishes a node sensing range, and the node sensing range is an electronic fence, it is determined whether the first object is in the first environment by judging whether the first object is located within the node sensing range constructed by the sensing node.

For example, the at least one sensing node can construct a node sensing range, as shown in Fig. 4A, the node sensing range can be constructed based on a single sensing node N1, and in this case, the node sensing range can be a circular region with the sensing node as the center; the node sensing range can also be constructed based on a plurality of sensing nodes, as shown in Fig. 4B, the node sensing range can be constructed based on four sensing nodes N2-N4, and in this case, the node sensing range can be a circumscribed rectangular region of the node sensing range constructed by the respective sensing nodes N2-N4.

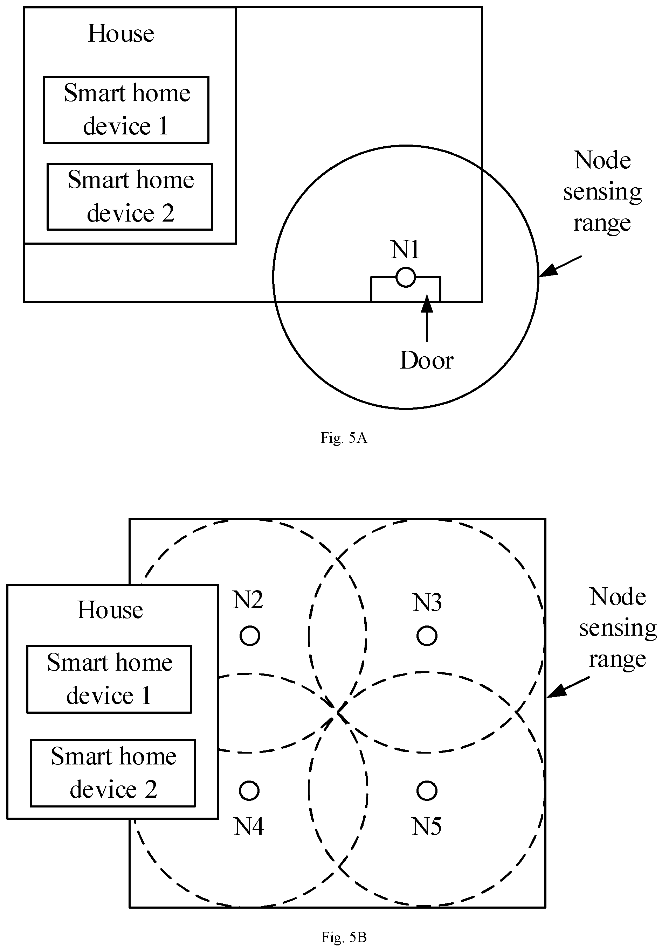

Fig. 5A is a schematic diagram of a position between a node sensing range and a home environment provided by at least one embodiment of the present disclosure, Fig. 5B is a schematic diagram of a position between another node sensing range and a home environment provided by at least one embodiment of the present disclosure.

For example, the first object is at least partially located within the node sensing range, the first response indicates that a connection is established between the first object and the second object, namely, a connection is established between the first object and at least one sensing node; the first object is located outside the node sensing range, the first response indicates that no connection is established between the first object and the second object, that is, no connection is established between the first object and the at least one sensing node.

For example, for a home environment, as shown in Fig. 5A, a single sensing node can be used to construct a node sensing range, and the sensing node is placed at a position such as a doorway; when an automobile is located within the node sensing range constructed by the sensing node, namely, when the position where the automobile is located at least partially overlaps with the node sensing range constructed by the sensing node, the automobile can establish a connection with the sensing node, namely, the automobile is located in the home environment; when the automobile is located outside the node sensing range constructed by the sensing node, the automobile cannot establish a connection with the sensing node, that is, the automobile is not located in the home environment.

As shown in Fig. 5B, a node sensing range can be constructed using a plurality of sensing nodes (in the example of Fig. 5B, four sensing nodes N2-N5), and the plurality of sensing nodes are placed around a house; when an automobile is located within the node sensing range constructed by the plurality of sensing nodes, namely, the position where the automobile is located at least partially overlaps with the node sensing range constructed by the plurality of sensing nodes, the automobile can establish a connection with the plurality of sensing nodes, namely, the automobile is located in a home environment; when an automobile is located outside the node sensing range constructed by the plurality of sensing nodes, the automobile cannot establish a connection with the plurality of sensing nodes, that is, the automobile is not located in a home environment. It should be noted that the positions of the plurality of sensing nodes shown in Fig. 5B are merely illustrative, and that the plurality of sensing nodes can be located around the house according to actual demands.

For example, the sensing node can be a node that can communicate, and the present disclosure does not limit the specific implementation form of the sensing node.

For example, in some embodiments, it is determined whether the first object is in the first environment by judging whether the first object is capable of accessing the network of the first environment, e.g., a second object is provided in the first environment and the environment communication module is disposed on the second object, the second object can include a network access device (such as, a modem, a router, etc.). Step S11 can include: in response to the first response indicating that the first object is connected to an environment network created by the second object, determining that the first object is in the first environment; in response to the first response indicating that the first object cannot be connected to an environment network created by the second object, determining that the first object is not in the first environment.

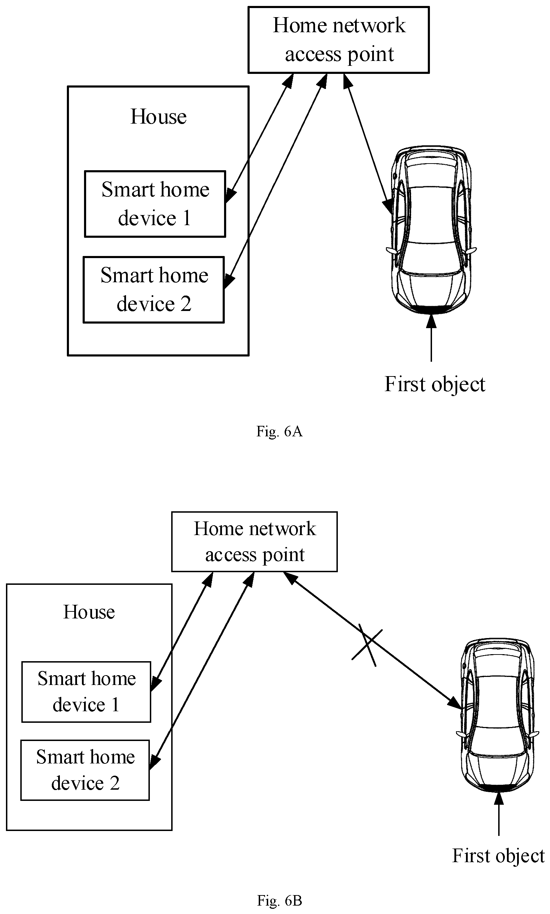

Fig. 6A is a schematic diagram illustrating an automobile accessing to a home network provided by at least one embodiment of the present disclosure; Fig. 6B is a schematic diagram illustrating an automobile not accessing to a home environment provided by at least one embodiment of the present disclosure.

For example, an automobile can be connected to a home network via WIFI, Bluetooth Low Energy (BLE), etc.; as shown in Fig. 6A, when an automobile can discover a smart home device in a home environment through a protocol such as WIFI/BLE, it indicates that the automobile accesses to a home network access point, and at this moment, the automobile is in the home environment; as shown in Fig. 6B, when an automobile cannot discover a smart home device in a home environment through a protocol such as WIFI/BLE, it indicates that the automobile does not access to a home network access point, and at this time, the automobile is not in the home environment.

For example, in some embodiments, the judgement information can be determined based on the position of the first object. In this case, step S10 can include: acquiring a distance between the first object and the first environment; generating the judgement information based on the distance and a distance threshold.

For example, in some examples, acquiring the distance between the first object and the first environment, can include: acquiring an object position of the first object; acquiring an environment position corresponding to the first environment; determining the distance based on the object position and the environment position.

For example, the object position of the first object can be obtained by a position sensor provided on the first object, and the environment position corresponding to the first environment can be stored in a memory of the first object in advance. After the first object acquires the object position via the position sensor, the environment position can be acquired from the memory, and the environment position is compared to the object position to determine the distance.

For example, the memory of the first object can store a plurality of environment positions corresponding to a plurality of environments in advance, and after acquiring the object position, the object position can be compared with the plurality of environment positions, respectively, to determine in which one or more environments the first object is specifically located. For another example, the plurality of environment positions can be assigned priorities, and after acquiring the object position, the object position is compared with the plurality of environment positions in order of priority successively.

For example, in some other examples, an environment communication module is provided in the first environment, and acquiring the distance between the first object and the first environment includes: sending a distance acquisition request to the environment communication module; receiving a distance acquisition response fed back by the environment communication module, the distance acquisition response including response time; determining the distance based on receiving time for receiving the distance acquisition response, sending time corresponding to sending the distance acquisition request, and the response time.

For example, the distance acquisition request can include the sending time corresponding to sending the distance acquisition request.

For example, in some other examples, an environment communication module is provided in the first environment, and acquiring the distance between the first object and the first environment includes: acquiring an object position of the first object; sending a position acquisition request to the environment communication module; receiving a position acquisition response fed back by the environment communication module, the position acquisition response including an environment position corresponding to the first environment; determining the distance based on the object position and the environment position. For example, the environment position can be set in advance and stored in a memory of the environment communication module, or, after the environment communication module receives the position acquisition request, a position sensor located in the first environment can be controlled to sense the environment position of the first environment and acquire the environment position.

For example, the environment communication module can be disposed on an electronic device or a sensing node or a network access device or the like located in the first environment.

It should be noted that the embodiments of the present disclosure do not limit the specific method of acquiring the distance between the first object and the first environment, for example, the distance can be measured by Bluetooth and/or in combination with the ranging method such as UWB, so that the accuracy of the acquired distance is higher and more accurate control is achieved.

For example, the first object can acquire the distance between the first object and the first environment based on a distance trigger condition, and the distance trigger condition can be an event trigger condition, etc., for example, the event trigger condition can be that the first object stops running, etc.; the first object can also acquire the distance between the first object and the first environment based on an instruction issued by the user.

For example, the distance between the first object and the first environment can be a maximum distance, a minimum distance, etc. between the first object and an environmental region corresponding to the first environment, or can also be a distance between a center of the first object and a center of the environmental region corresponding to the first environment.

For example, in some embodiments, generating the judgement information based on the distance and the distance threshold can include: generating first judgement sub-information in response to the distance being less than the distance threshold; generating second judgement sub-information in response to the distance being greater than or equal to the distance threshold. The judgement information includes the first judgement sub-information and the second judgement sub-information.

For example, in some embodiments, step S11 can include: in response to the judgement information indicating that the distance is less than the distance threshold, namely, in response to the judgement information being the first judgement sub-information, determining that the first object is in the first environment; in response to the judgement information indicating that the distance is greater than or equal to the distance threshold, namely, in response to the judgement information being the second judgement sub-information, determining that the first object is not in the first environment.

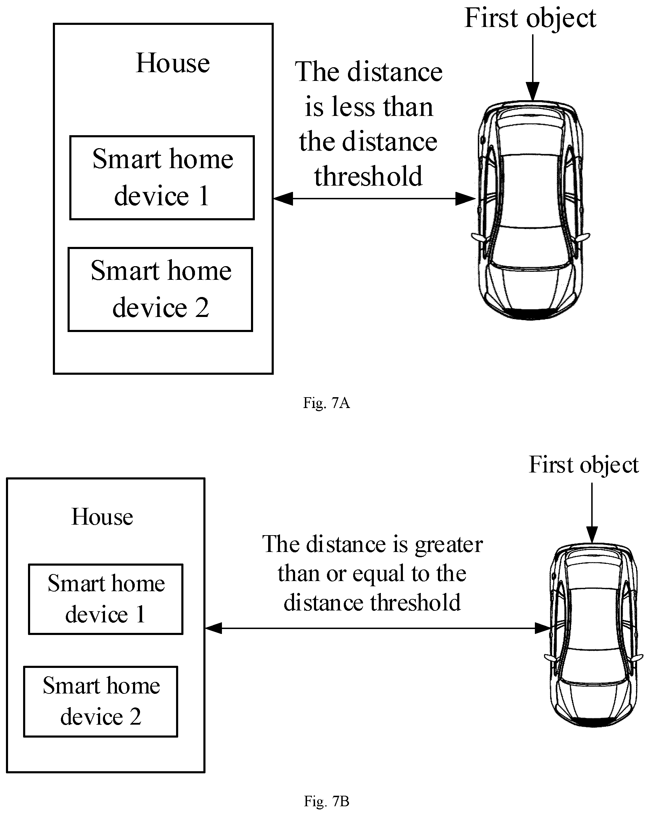

Fig. 7A is a schematic diagram illustrating an automobile being in a home environment provided by at least one embodiment of the present disclosure; Fig. 7B is a schematic diagram illustrating an automobile being not in a home environment provided by at least one embodiment of the present disclosure.

As shown in Fig. 7A, when the distance between the automobile and the home environment is less than the distance threshold, the automobile is in the home environment; as shown in Fig. 7B, when the distance between the automobile and the home environment is greater than or equal to the distance threshold, the automobile is not in the home environment.

For example, the distance threshold can be automatically set according to the first environment, or can be automatically set by the user. In some examples, the distance threshold can be 10 meters, 20 meters, 30 meters, 50 meters, etc.

For example, when the memory of the first object stores a plurality of environment positions corresponding to a plurality of environments in advance, for example, after acquiring an object position, the object position can be compared with the plurality of environment positions successively, and when it is determined that the distance between the object position of the first object and a certain environment position is less than the distance threshold, a position comparison process can be stopped, namely, the remaining environment positions which are not compared are not compared with the object position, so that time can be saved; for another example, after the object position is acquired, the object position can be compared with the plurality of environment positions successively until the object position is compared with all the stored environment positions, and then it is determined whether there is an environment position the distance between which and the object position is less than the distance threshold, so that a more accurate judgement can be achieved, thus avoiding erroneous environment position judgement.

For example, the judgement information can be determined by combining at least two selected from the group of an electronic device-based judgement method, a sensing node-based judgement method, an environment network-based judgement method, and a position-based judgement method, thereby making the judgement process more accurate.

For example, in some embodiments, the judgement information can be determined by combining the electronic device-based judgement method and the sensing node-based judgement method. A second object is provided in the first environment, the second object includes at least one electronic device and at least one sensing node, the environment communication module includes a first sub-communication module arranged on the at least one electronic device and a second sub-communication module arranged on the at least one sensing node, and the first response includes a first sub-response sent by the first sub-communication module and a second sub-response sent by the second sub-communication module. Step S11 can include: in response to the first sub-response indicating that a connection is established between the first object and any one of the at least one electronic device or the at least one electronic device and the second sub-response indicating that a connection is established between the first object and the at least one sensing node, determining that the first object is in the first environment and is located in an internal region corresponding to the first environment; in response to the first sub-response indicating that a connection is established between the first object and any one of the at least one electronic device or the at least one electronic device and the second sub-response indicating that no connection is established between the first object and the at least one sensing node, determining that the first object is in the first environment and is located in an external region corresponding to the first environment; in response to the first response indicating that no connection is established between the first object and the at least one electronic device, determining that the first object is not in the first environment.

For example, in some embodiments, the judgement information can be determined by combining the environment network-based judgement method and the sensing node-based judgement method. A second object is provided in the first environment, the second object includes a network access device and at least one sensing node, the environment communication module includes a third sub-communication module arranged on the network access device and a second sub-communication module arranged on the at least one sensing node, and the first response includes a second sub-response sent by the second sub-communication module and a third sub-response sent by the third sub-communication module. Step S11 can include: in response to the third sub-response indicating that the first object is connected to the environment network created by the network access device and the second sub-response indicating that a connection is established between the first object and the at least one sensing node, determining that the first object is in the first environment and is located in an internal region corresponding to the first environment; in response to the third sub-response indicating that the first object is connected to an environment network created by the network access device and the second sub-response indicating that no connection is established between the first object and the at least one sensing node, determining that the first object is in the first environment and is located in an external region corresponding to the first environment; and in response to the third response indicating that the first object is unable to be connected to the environment network created by the network access device, determining that the first object is not in the first environment.

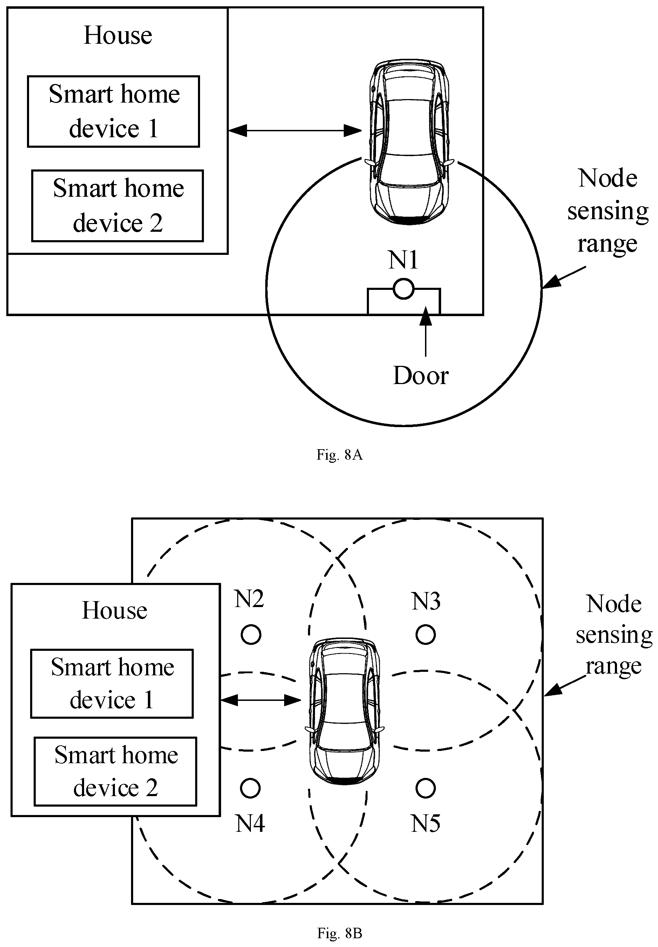

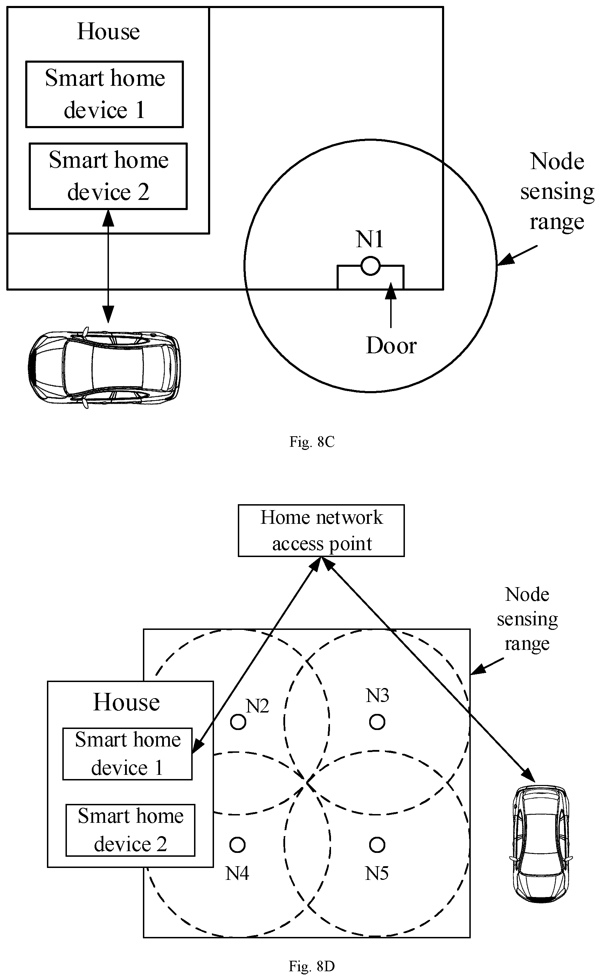

Fig. 8A is a schematic diagram illustrating an automobile being in an internal region corresponding to a home environment provided by at least one embodiment of the present disclosure; Fig. 8B is another schematic diagram illustrating an automobile being in an internal region corresponding to a home environment provided by at least one embodiment of the present disclosure; Fig. 8C is a schematic diagram illustrating an automobile being in an external region corresponding to a home environment provided by at least one embodiment of the present disclosure; Fig. 8D is another schematic diagram illustrating an automobile being in an external region corresponding to a home environment provided by at least one embodiment of the present disclosure.

In the examples shown in Figs. 8A-8D, the automobiles are all in the home environment.

When an electronic fence (a node sensing range constructed by a sensing node) exists in a home environment, the electronic fence can be used to judge whether the automobile is located in an internal region corresponding to the home environment or is located in an external region corresponding to the home environment. As shown in Figs. 8A to 8C, a connection is established between an automobile and a smart home device of a house, and then it is determined that the automobile is located in the home environment; in the example shown in Fig. 8D, an automobile accesses a home network access point, thereby determining that the automobile is located in the home environment; when it is determined that the automobile is located in the home environment, because there is an electronic fence in the home environment, it can be further determined whether the automobile is located in the internal region or the external region corresponding to the home environment based on the electronic fence, for example, as shown in Fig. 8A and Fig. 8B, it is determined that the automobile is located in the internal region corresponding to the home environment when the position of the automobile at least partially overlaps with the node sensing range. As shown in Fig. 8C and Fig. 8D, when the automobile is located outside the node sensing range, i.e., the position of the automobile completely does not overlap with the node sensing range, it can be judged that the automobile is located in the external region corresponding to the home environment.

In the above-mentioned embodiments, the first object actively sends a request to the environment communication module, but the embodiments of the present disclosure are not limited thereto; the environment communication module in the first environment can also actively send a request to the first object; for example, in some embodiments, the environment communication module is provided in the first environment, and step S10 can include: receiving a second request sent by the environment communication module; generating and sending a second response to the environment communication module based on the second request; and acquiring the judgement information sent by the environment communication module based on the second response.

For example, the specific forms of the second request and the second response can be set according to actual situations, and the embodiments of the present disclosure do not limit the specific forms.

For example, in some embodiments, the working mode of the control element corresponding to the first object is a contactless/non-contact/seamless operation mode. When the first object is an automobile, the control element can be a digital key, and the digital key can be implemented as an NFC key, a Bluetooth key, a UWB key, an application on a mobile terminal (a smart phone, a smart bracelet, etc.), and so on. In the contactless operation mode, there is no need to operate the digital key, and according to the different distances between the digital key and the automobile, the functions of comfortable welcome, off-vehicle locking, keyless entry, and keyless starting are achieved respectively from far to near, so as to improve the user's experience.

For example, the control element corresponds to at least one working region. As shown in Fig. 1, the control element can correspond to a plurality of working regions, respectively working regions R1-R6.

For example, the contactless operation mode includes at least one sensing operation corresponding to at least one working region one by one, and the sensing operations corresponding to different working regions can be different, as shown in Fig. 1, the sensing operation corresponding to the working region R1 can be vehicle starting; the sensing operation corresponding to the working region R2 can be a passive entry function; the sensing operation corresponding to the working region R3 can be unlocking; the sensing operation corresponding to the working region R4 can be locking; the sensing operation corresponding to the working region R5 can be "Welcome"; the sensing operation corresponding to the working region R6 can be connection, authentication, and the like between the control element and the first object.

Each of the working regions and the corresponding sensing operation thereof can be default or set by the user according to actual needs, so as to improve the flexibility of the contactless operation mode and make it more adaptable to the actual demands of the user.

In the embodiments of the present disclosure, when the first object is located in the first environment, an environment operation rule corresponding to the first environment can be automatically executed, that is, an environment-based non-contact operation is achieved, further improving the user experience.

For example, in some embodiments, step S12 can include: controlling the at least one sensing operation and/or a range of the at least one working region. That is, the environment operation rule includes controlling the at least one sensing operation and/or the range of the at least one working region. After executing the environment operation rule, the working mode of the control element can be switched from a normal contactless operation mode to an environment contactless operation mode corresponding to the first environment, the operations corresponding to the respective working regions in the normal contactless operation mode can be as shown in the above-mentioned Table 1. In different environments, the controllable working region and sensing operation can be set by default or set by the user, so as to improve the flexibility of non-contact operation based on the environment and meet the demands of different scenarios.

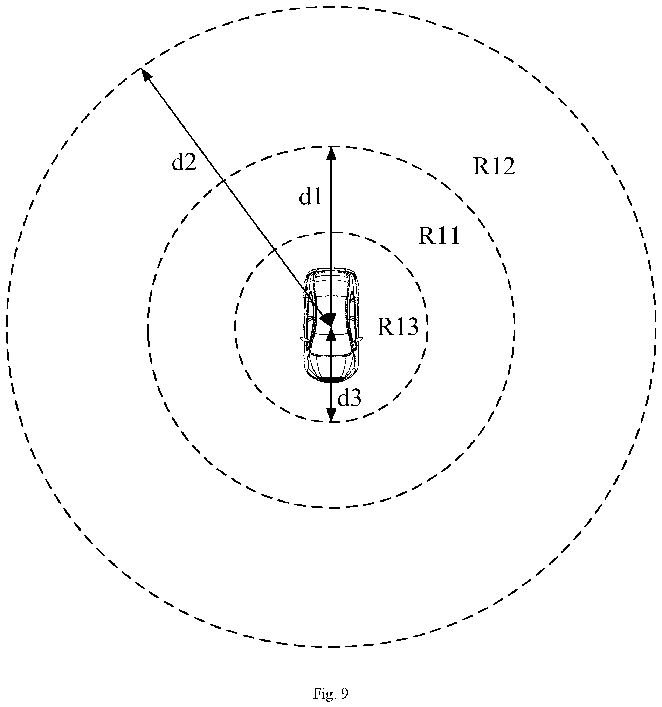

Fig. 9 is a schematic diagram of a plurality of working regions corresponding to a control element of a first object provided by at least one embodiment of the present disclosure.

For example, as shown in Fig. 9, the at least one working region includes a first working region R11, the first working region R11 is an annular region, and the at least one sensing operation includes a first sensing operation corresponding to the first working region R11; for example, in some embodiments, the first working region R11 can be a working region R5 shown in Fig. 1, namely, a welcome region, and in this case, the first sensing operation is a welcome operation. For example, controlling the at least one sensing operation and/or the range of the at least one working region includes: narrowing the range of the first working region and/or turning off the first sensing operation.

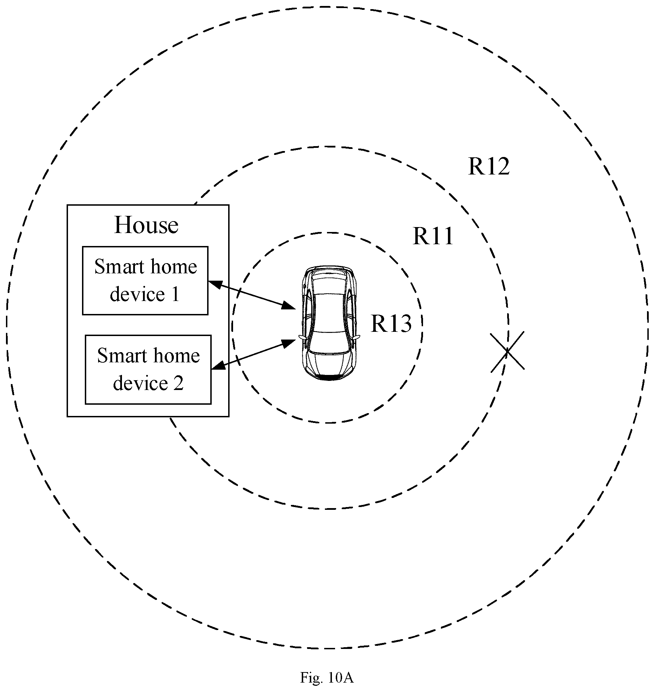

Figs. 10A-10E are schematic diagrams of respective working regions under various environment operation rules provided by at least one embodiment of the present disclosure.

As shown in Fig. 10A, in some embodiments, when a connection is established between an automobile and a smart home device 1 and/or a smart home device 2 in a home environment, the automobile detects that it is in the home environment corresponding to the house, and in this case, the first sensing operation can be turned off, namely, the first working region is turned off.

In some other embodiments, when a connection is established between the automobile and the smart home device 1 and/or the smart home device 2 in the home environment, the automobile detects its presence in the home environment corresponding to the house, and in this case, the range of the first working region can be narrowed.

For example, as shown in Fig. 9, the at least one working region further includes a second working region R12, the second working region R12 is an annular region, and the at least one sensing operation includes a second sensing operation corresponding to the second working region R12; for example, in some embodiments, the second working region R12 can be the working region R6 shown in Fig. 1, namely, a connection region, and in this case, the second sensing operation is an operation such as connection and authentication between the control element and the first object. The maximum distance between the first working region R11 and the first object is a first distance d1, the maximum distance between the second working region R12 and the first object is a second distance d2, and the first distance d1 is less than the second distance d2. For example, in some examples, the first distance d1 can be 8 to 15 meters and the second distance d2 can be 30 meters or more.

For example, controlling the at least one sensing operation and/or the range of the at least one working region further includes: narrowing the range of the second working region and/or turning off the second sensing operation.

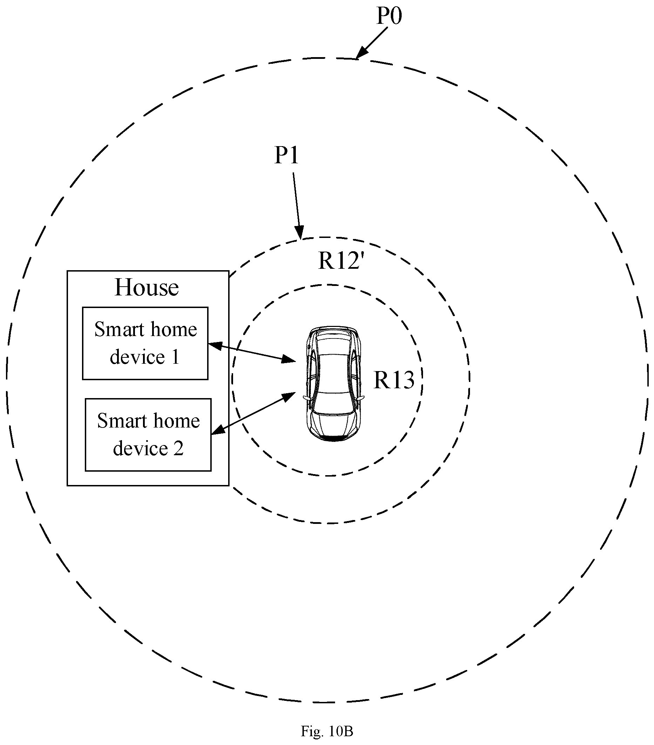

As shown in Fig. 10B, in some embodiments, when a connection is established between an automobile and a smart home device 1 and/or a smart home device 2 in a home environment, the automobile detects that it is in the home environment corresponding to the house, in this case, the first sensing operation can be turned off, namely, the first working region is turned off, and at the same time, the range of the second working region can also be narrowed, for example, an edge line of the second working region can be moved from a position P0 to a position P1 so as to determine a new second working region R12', the range of the second working region R12' is less than the range of the second working region R12; that is, the maximum distance between the second working region R12' and the first object is smaller than the second distance d2, for example, the maximum distance between the second working region R12' and the first object can be 3-5 meters. For clarity, the first working region R11 is not shown in Fig. 10B.

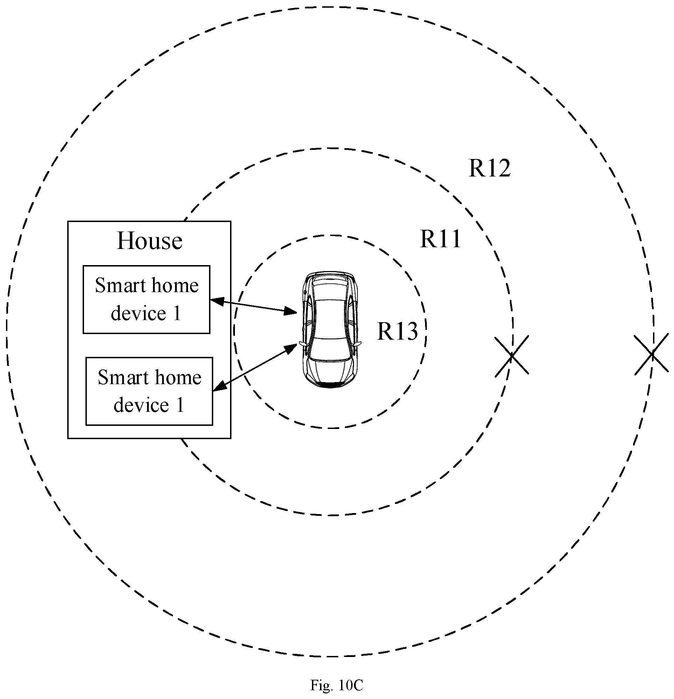

As shown in Fig. 10C, in some embodiments, when a connection is established between an automobile and a smart home device 1 and/or a smart home device 2 in a home environment, the automobile detects that it is in the home environment corresponding to the house, and in this case, the first sensing operation and the second sensing operation can be turned off, that is, the first working region R11 and the second working region R12 can be turned off.

For example, as shown in Fig. 9, the at least one working region further includes a third working region R13, and the at least one sensing operation includes a third sensing operation corresponding to the third working region R13, for example, in some embodiments, the third working region R13 can be the working region R3 shown in Fig. 1, namely, an unlocking region, and in this case, the third sensing operation is to control the unlocking of the automobile. The maximum distance between the first working region R11 and the first object is a first distance d1, the maximum distance between the third working region R13 and the first object is a third distance d3, and the first distance d1 is greater than the third distance d3. For example, in some examples, the third distance d3 can be 3 meters or less.

For example, controlling the at least one sensing operation and/or the range of the at least one working region further includes: narrowing the range of the third working region and/or turning off the third sensing operation.

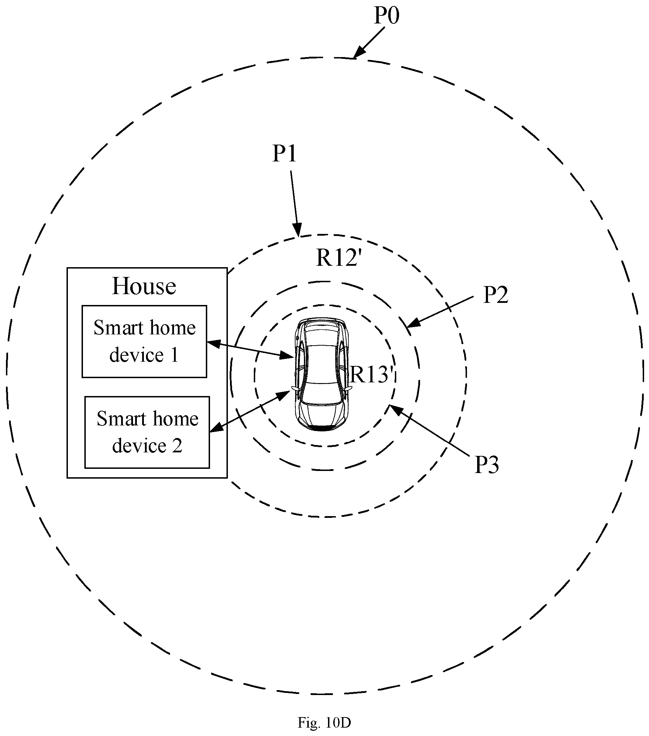

As shown in Fig. 10D, in some embodiments, when a connection is established between the automobile and the smart home device 1 and/or the smart home device 2 in the home environment, the automobile detects that it is in the home environment corresponding to the house, in this case, the first sensing operation can be turned off, namely, the first working region is turned off, and at the same time, the range of the second working region and the range of the third working region can also be narrowed, for example, an edge line of the second working region can be moved from a position P0 to a position P1 so as to determine a new second working region R12'; an edge line of the third working region can be moved from a position P2 to a position P3 to determine a new third working region R13'. The range of the second working region R12' is less than the range of the second working region R12, namely, the maximum distance between the second working region R12' and the first object is less than the second distance d2, for example, the maximum distance between the second working region R12' and the first object can be 3-5 meters; the range of the third working region R13' is less than the range of the third working region R13, that is, the maximum distance between the third working region R13' and the first object is less than the third distance d3, for example, the maximum distance between the third working region R13' and the first object can be 2 meters or less. For the purpose of clarity only, the first working region R11 is not shown in Fig. 10D.

For example, in some embodiments, when a connection is established between an automobile and a smart home device 1 and/or a smart home device 2 in a home environment, the automobile detects that it is in the home environment corresponding to the house, in this case, the first sensing operation and the second sensing operation can be turned off, that is, the first working region and the second working region can be turned off, and at the same time, the range of the third working region can also be narrowed.

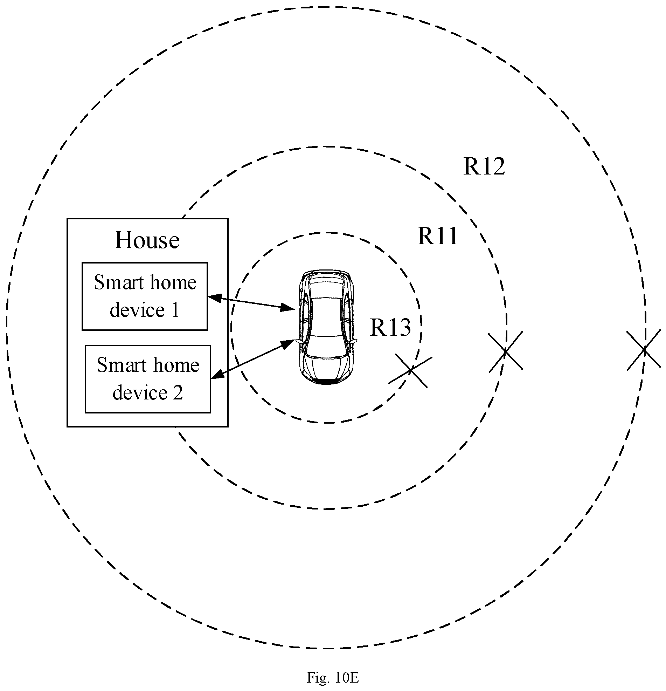

As shown in Fig. 10E, in some embodiments, when a connection is established between an automobile and a smart home device 1 and/or a smart home device 2 in a home environment, the automobile detects that it is in the home environment corresponding to the house, and in this case, the first sensing operation to the third sensing operation can be turned off, namely, the ranges of the first working region to the third working region can be turned off.

Each of the working regions shown in Figs. 10A to 10E is schematic, and more or less working regions can be provided according to actual needs. Furthermore, the size of each of the working regions can also be set according to actual demands, and the embodiments of the present disclosure are not particularly limited thereto.

For example, in some embodiments, when the second object includes at least one sensing node, step S12 can include: in response to the first object being in the internal region corresponding to the first environment, executing an internal operation rule corresponding to the internal region; and in response to the first object being in the external region corresponding to the first environment, executing an external operation rule corresponding to the external region.

For example, the environment operation rule includes the internal operation rule and the external operation rule, and the internal operation rule and the external operation rule are at least partially different. In some examples, the internal operation rule can include turning off the first sensing operation and narrowing the range of the second working region, and the external operation rule can include narrowing the range of the second working region; in some other examples, the internal operation rule can include turning off the first sensing operation and the second sensing operation, and the external operation rule can include narrowing the range of the second working region or turning off the second sensing operation.

For example, environment operation rules corresponding to different environments can at least partially different, e.g., an environment operation rule corresponding to a home environment can differ at least partially from an environment operation rule corresponding to an office environment.

For example, in embodiments of the present disclosure, the environment operation rule is not executed in response to the first object being not in the first environment.

For example, in some embodiments, the operation method can further include: before acquiring the judgement information, matching the first object with the first environment. For example, matching the object communication module in the first object with the environment communication module set in the first environment, for example, pairing can be performed via Bluetooth pairing, NFC, or other methods.

It should be noted that, in the embodiments of the present disclosure, "the first object being in the first environment" means at least one of the following situations: establishing a connection between the first object and an electronic device in the first environment, the first object accessing an environment network corresponding to the first environment, establishing a connection between the first object and a sensing node in the first environment, and a distance between the first object and the first environment being less than a distance threshold, and does not mean that the first object is spatially in the first environment.

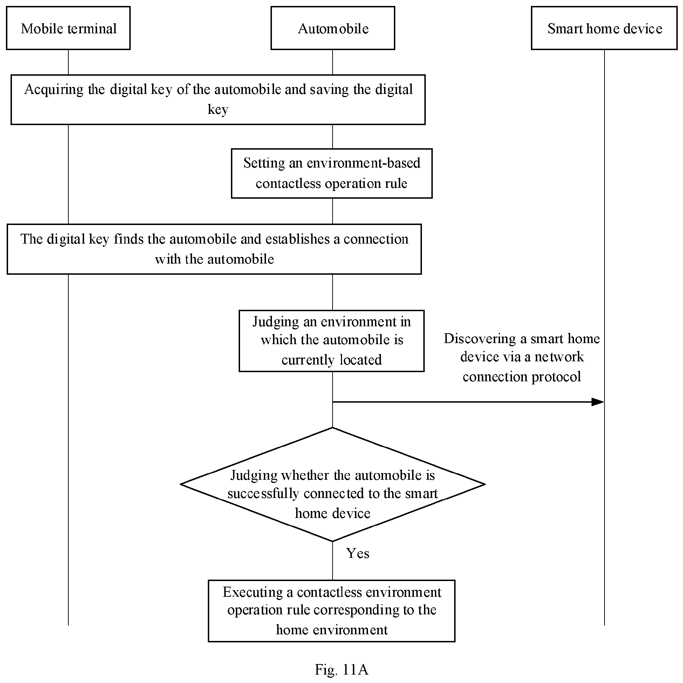

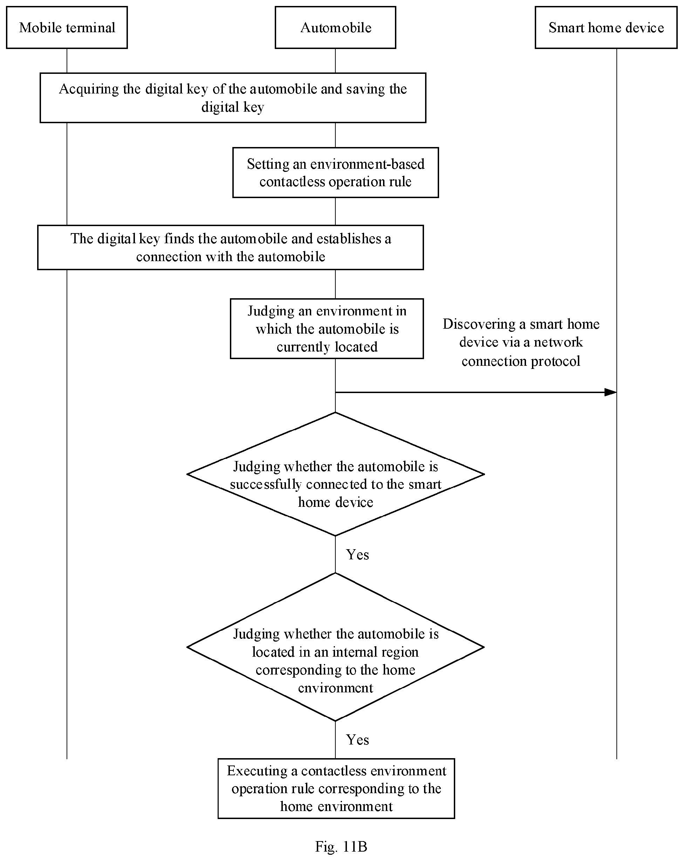

Fig. 11A is a schematic flowchart of an operation method provided by at least one embodiment of the present disclosure; Fig. 11B is a schematic flowchart of another operation method provided by at least one embodiment of the present disclosure.

The operation method provided by an embodiment of the present disclosure is described below in conjunction with Figs. 11A and 11B. In the examples of Figs. 11A and 11B, the first object is an automobile, and the first environment is a home environment.

As shown in Fig. 11A, firstly pairing between a digital key and an automobile can be performed and a contactless operation mode is set, for example, a mobile terminal (for example, a smart phone, etc.) acquires the digital key of the automobile and saves the digital key in a local security execution environment; the automobile sets an environment-based contactless operation rule, including a judgement rule of an environment in which the automobile is located (see the above-mentioned step S10 and step S11), an execution rule of the automobile in the environment (see the above-mentioned step S12), etc.; then, the digital key detects the automobile and establishes a connection with the automobile; then, the operation method provided by an embodiment of the present disclosure can be executed, for example, the automobile judges an environment in which the automobile is currently located, for example, taking a case of judging whether the automobile is in a home environment as an example, the automobile discovers a smart home device via a network connection protocol and tries to establish a connection with the smart home device; when the automobile judges that the automobile is successfully connected to the smart home device, a contactless environment operation rule under a home environment is executed, for example, an operation shown in Fig. 10D can be executed, namely, turning off a first sensing operation of a first working region (a welcome region), and narrowing the range of a second working region (a connection region) and the range of a third working region (an unlocking region).

As shown in Fig. 11B, firstly pairing between a digital key and an automobile can be performed and a contactless operation mode is set, for example, a mobile terminal (for example, a smart phone, etc.) acquires the digital key of the automobile and saves the digital key in a local security execution environment; the automobile sets an environment-based contactless operation rule, including a judgement rule of an environment in which the automobile is located (see the above-mentioned step S10 and step S11), an execution rule of the automobile in the environment (see the above-mentioned step S12), etc.; then, the digital key finds the automobile and establishes a connection with the automobile; then, the operation method provided by an embodiment of the present disclosure can be executed, for example, the automobile judges an environment in which the automobile is currently located, for example, taking a case of judging whether the automobile is in a home environment as an example, the automobile discovers a smart home device via a network connection protocol and tries to establish a connection with the smart home device; when the automobile judges that the automobile is successfully connected to the smart home device, the automobile judges whether the automobile is located in an internal region corresponding to the home environment, namely, judging whether the automobile is located in a node sensing range constructed by a sensing node; when the automobile judges that the automobile is at least partially located in the node sensing range, it is determined that the automobile is located in the internal region corresponding to the home environment; then, a contactless environment operation rule corresponding to the internal region corresponding to the home environment is executed, for example, an operation shown in Fig. 10C can be executed; namely, turning off a first sensing operation in a first working region (a welcome region) and a second sensing operation in a second working region (a connection region); when the automobile judges that the automobile is located outside the node sensing range, it is determined that the automobile is located in an external region corresponding to a home environment, and then a contactless environment operation rule corresponding to the external region corresponding to the home environment is executed, for example, the range of the second working region (a connection region) can be narrowed.

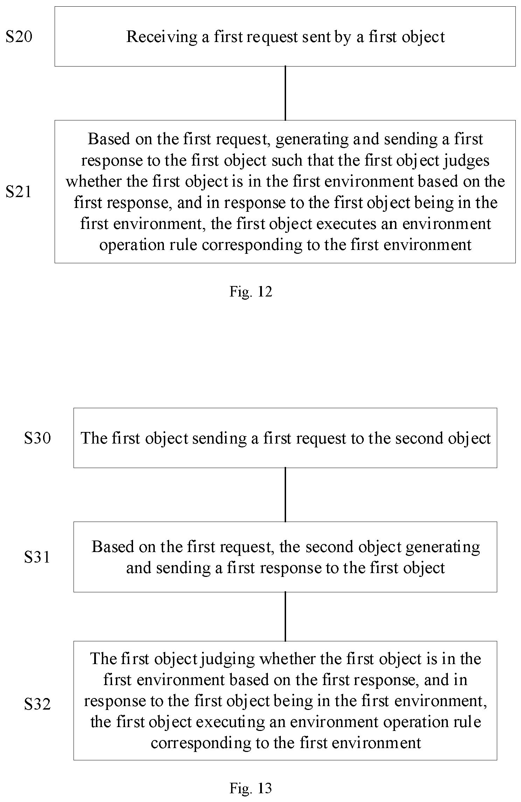

Fig. 12 is a schematic diagram of another operation method provided by at least one embodiment of the present disclosure.

At least one embodiment of the present disclosure also provides an operation method, and the operation method can be applied to a second object, for example, the second object is located in a first environment, and the first environment can be a home environment, an office environment, a camping environment, or the like.

As shown in Fig. 12, the operation method includes the following steps S20 to S21.

Step S20: receiving a first request sent by a first object.

Step S21: based on the first request, generating and sending a first response to the first object such that the first object judges whether the first object is in the first environment based on the first response, and in response to the first object being in the first environment, the first object executes an environment operation rule corresponding to the first environment.

For a detailed description of the first request and the first response, reference can be made to the above-mentioned embodiment of the operation method applied to the first object, which will not be repeated here.

For example, the second object includes an environment communication module, and the environment communication module can receive the first request and generate the first response based on the first request.

For example, in the case where the first environment is a home environment, the second object can include one or more of a smart home device, a sensing node, a network access device, and in some embodiments, in step S21, the first response can include judgement information, and the judgement information is used for indicating whether the first object establishes a connection with the smart home device and/or the sensing node or for indicating whether the first object accesses the environment network created by the network access device.

For example, in some other embodiments, in step S21, the first response can include an environment position corresponding to the first environment, such that the first object can judge whether the first object is in the first environment based on the environment position and the object position where the first object is located.

For example, in some other embodiments, the first request can include an object position corresponding to the first object, and in step S21, after receiving the first request, the environment communication module can acquire the environment position corresponding to the first environment and determine a distance between the first environment and the first object based on the object position and the environment position, and the first response can include the distance between the first environment and the first object, so that the first object can judge whether the first object is in the first environment based on the distance between the first environment and the first object.

Reference can be made to the above-mentioned relevant description of step S11 for the specific process of the first object judging whether the first object is in the first environment based on the first response, and reference can be made to the above-mentioned relevant description of step S12 for the specific process of executing the environment operation rule corresponding to the first environment, and repetition will not be repeated here.

For the technical effects that can be achieved by the operation method applied to the second object, reference can be made to the related description in the above-mentioned embodiment of the operation method applied to the first object, and repetition will not be repeated here.

Fig. 13 is a schematic diagram of yet another operation method provided by at least one embodiment of the present disclosure.

At least one embodiment of the present disclosure also provides an operation method, and the operation method can be applied to a first object and a second object, the second object is located in a first environment.

In some embodiments, as shown in Fig. 13, the operation method includes the following steps S30-S31.

Step S30: the first object sending a first request to the second object.

Step S31: based on the first request, the second object generating and sending a first response to the first object.

Step S32: the first object judging whether the first object is in the first environment based on the first response, and in response to the first object being in the first environment, the first object executing an environment operation rule corresponding to the first environment.

For example, in some other embodiments, the operation method can include the following steps of: the second object sending a second request to the first object; based on the second request, the first object generating and sending a second response to the second object; the second object generating and sending judgement information to the first object based on the second response; the first object determining whether the first object is in the first environment based on the judgement information, and in response to the first object being in the first environment, the first object executing an environment operation rule corresponding to the first environment.

With regard to the technical effects that can be achieved by the operation method applied to the first object and the second object, reference can be made to the related description in the above-mentioned embodiment of the operation method applied to the first object, and repetition will not be repeated here.

In the embodiments of the present disclosure, an object can be in different environments, and when the object is in different environments, environment operation rules respectively corresponding to the different environments can be executed. For example, when a first object (e.g., an automobile) is in a first environment (e.g., a home environment), the first object executes an environment operation rule corresponding to the first environment, and when the first object is in a second environment (e.g., an office environment), the first object executes an environment operation rule corresponding to the second environment. The environment operation rule corresponding to the first environment and the environment operation rule corresponding to the second environment can be at least partially different or completely identical. The same object can be in different environments at the same time.

In the embodiments of the present disclosure, one environment can correspond to different objects, and environment operation rules are set for the different objects, respectively. For example, when a first object (such as, a fuel-powered automobile) is in a first environment (such as, a home environment), the first object executes a first environment operation rule corresponding to the first environment, and when a second object (such as, an electric automobile) is in the first environment, the second object executes a second environment operation rule corresponding to the first environment, the first environment operation rule corresponds to the first object, the second environment operation rule corresponds to the second object, and the first environment operation rule and the second environment operation rule can be at least partially different or completely identical. A plurality of objects can be in the same environment at the same time.

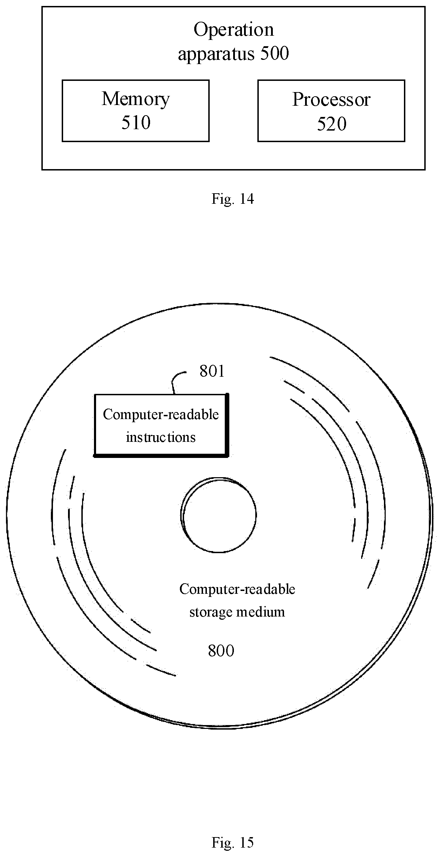

At least one embodiment of the present disclosure also provides an operation apparatus. Fig. 14 is a schematic diagram of an operation apparatus provided by at least one embodiment of the present disclosure.

For example, as shown in Fig. 14, the operation apparatus 500 can include: a memory 510 and a processor 520. It should be noted that the components of the operation apparatus 500 shown in Fig. 14 are merely exemplary and not limiting, and that the operation apparatus 500 can also have other components according to the actual application requirement.

For example, the memory 510 is used for storing computer-readable instructions non-transiently; the processor 520 is configured to run the computer-readable instructions, and the computer-readable instructions, when run by the processor 520, execute one or more steps in the operation method according to any of the embodiments as described above.

For example, the components such as the memory 510 and the processor 520 can be connected with each other through a network for communicate. The network may comprise a wireless network, a wired network, and/or any combination of the wireless network and the wired network. The network can include a local area network, the Internet, a telecommunications network, the Internet of Things based on Internet and/or telecommunications network, and/or any combination of the above networks. The wired network can, for example, communicate by using the twisted pair, coaxial cable, fiber optic transmission, or the like. The wireless network can employ, for example, a 3 G/4G/5G mobile communication network, Bluetooth, Zigbee, WiFi, or other communication modes. The present disclosure does not limit the type and function of the network.

For example, the processor 520 can control other components in the operation apparatus 500 to perform desired functions. The processor 520 may be a device with data processing capability and/or program execution capability, such as a central processing unit (CPU), a tensor processing unit (TPU), Graphics Processing Unit (GPU), a microprocessor, etc. The central processing unit (CPU) can be X86 or ARM architecture, etc.

For example, the memory 510 may include any combination of one or more computer program products, which may include various forms of computer-readable storage media, such as a volatile memory and/or a nonvolatile memory. The volatile memory may include, for example, a random-access memory (RAM) and/or a cache, etc. The nonvolatile memory may include, for example, a read-only memory (ROM), a hard disk, an erasable programmable read-only memory (EPROM), a portable compact disk read-only memory (CD-ROM), a USB memory, a flash memory, etc. One or more computer-readable instructions can be stored on the computer-readable storage medium, and the processor 510 can execute the computer-readable instructions to implement various functions of the operation apparatus 500. The computer-readable storage medium can also store various application programs, various data, and the like.

For example, in some embodiments, the operation apparatus 500 can be disposed in a vehicle provided with the object communication module, for example, an automobile, a motorcycle, a motor tricycle, etc. When the operation apparatus 500 is provided on an automobile, the automobile can include an on-vehicle device, etc., and the memory 510 and the processor 520 are integrated in the on-vehicle device, the on-vehicle device can have an Android system, an IOS system, a HarmonyOS system, a Windows system, etc.

For example, in some embodiments, the operation apparatus 500 can be a smart home device provided with an environment communication module, or the like, the memory 510 and the processor 520 are integrated in the smart home device.

For a detailed description of the process in which the operation apparatus 500 executes the operation method, reference can be made to the related description in the embodiment of the operation method as described above, and the repetition will not be repeated here.

For the technical effects that can be achieved by the operation apparatus 500, reference can be made to the related description in the above-mentioned embodiment of the operation method applied to the first object, and the repetition will not be repeated here.

At least one embodiment of the present disclosure also provides a computer-readable storage medium. Fig. 15 is a schematic diagram of a computer-readable storage medium provided by at least one embodiment of the present disclosure. For example, as shown in Fig. 15, one or more computer-readable instructions 801 can be stored on a computer-readable storage medium 800 in a non-transitory manner. For example, the computer-readable instructions 801, when executed by a computer, can cause the computer to perform one or more steps in the operation method according to any of the embodiments as described above. For example, the computer-readable storage medium 800 can be a non-transitory computer-readable storage medium.

For example, the computer-readable storage medium 800 can be applied to the operation apparatus 500 described in any of the above embodiments, for example, the computer-readable storage medium 800 can be the memory 510 in the operation apparatus 500.

For the description of the computer-readable storage medium 800, reference may be made to the description of the memory 510 in the embodiment of the operation apparatus 500 described in any of the above embodiments, and repetition will not be repeated here.

For the technical effects that can be achieved by the computer-readable storage medium 800, reference can be made to the related description in the embodiment of the operation method applied to the first object as described above, and repetition will not be repeated.

For the present disclosure, the following statements should be noted:
(1) the accompanying drawings of the embodiment(s) of the present disclosure involve only the structure(s) related to the embodiment(s) of the present disclosure, and other structure(s) can refer to common design(s);
(2) for the sake of clarity, in the accompanying drawings for illustrating the embodiment(s) of the present disclosure, the size of the region is enlarged or reduced, that is, these drawings are not drawn to the actual scale; and
(3) in case of no conflict, the embodiments of the present disclosure and the features in the embodiment(s) can be combined with each other to obtain new embodiment(s).

What have been described above are only specific implementations of the present disclosure, the scope of protection of the present disclosure is not limited thereto, and the scope of protection of the present disclosure should be based on the scope of protection of the appended claims.

## Claims

1. An operation method, applied to a first object, comprising:
acquiring judgement information;
judging whether the first object is in a first environment based on the judgement information; and
in response to the first object being in the first environment, executing an environment operation rule corresponding to the first environment.

2. The operation method according to claim 1, wherein an environment communication module is provided in the first environment,
the acquiring judgement information comprises:
sending a first request to the environment communication module; and
receiving a first response sent by the environment communication module, wherein the judgement information comprises the first response.

3. The operation method according to claim 2, wherein a second object is provided in the first environment, and the environment communication module is arranged on the second object,
the judging whether the first object is in a first environment based on the judgement information comprises:
in response to the first response indicating that a connection is established between the first object and the second object, determining that the first object is in the first environment; and
in response to the first response indicating that no connection is established between the first object and the second object, determining that the first object is not in the first environment.

4. The operation method according to claim 3, wherein the second object comprises at least one electronic device.

5. The operation method according to claim 3 or 4, wherein the second object comprises at least one sensing node, and the at least one sensing node establishes a node sensing range,
the first object is at least partially located within the node sensing range, the first response indicates that a connection is established between the first object and the second object;
the first object is located outside the node sensing range, the first response indicates that no connection is established between the first object and the second object.

6. The operation method according to claim 2, wherein a second object is provided in the first environment, and the environment communication module is arranged on the second object,
the judging whether the first object is in a first environment based on the judgement information comprises:
in response to the first response indicating that the first object is connected to an environment network created by the second object, determining that the first object is in the first environment;
in response to the first response indicating that the first object is not able to be connected to the environment network created by the second object, determining that the first object is not in the first environment.

7. The operation method according to any one of claims 3 to 6, wherein the first object and the second object support the same network connection protocol.

8. The operation method according to claim 1, wherein the acquiring judgement information comprises:
acquiring a distance between the first object and the first environment; and
generating the judgement information based on the distance and a distance threshold.

9. The operation method according to claim 8, wherein the acquiring a distance between the first object and the first environment comprises:
acquiring an object position of the first object;
acquiring an environment position corresponding to the first environment; and
determining the distance based on the object position and the environment position.

10. The operation method according to claim 8 or 9, wherein an environment communication module is provided in the first environment,
the acquiring a distance between the first object and the first environment comprises:
sending a distance acquisition request to the environment communication module;
receiving a distance acquisition response fed back by the environment communication module, wherein the distance acquisition response comprises response time; and
determining the distance based on receiving time for receiving the distance acquisition response, sending time for sending the distance acquisition request, and the response time.

11. The operation method according to any one of claims 8 to 10, wherein the judging whether the first object is in a first environment based on the judgement information, comprises:
in response to the judgement information indicating that the distance is less than the distance threshold, determining that the first object is in the first environment; and
in response to the judgement information indicating that the distance is greater than or equal to the distance threshold, determining that the first object is not in the first environment.

12. The operation method according to claim 2, wherein a second object is provided in the first environment, the second object comprises an electronic device and at least one sensing node, the environment communication module comprises a first sub-communication module arranged on the electronic device and a second sub-communication module arranged on the at least one sensing node, and the first response comprises a first sub-response sent by the first sub-communication module and a second sub-response sent by the second sub-communication module,
the judging whether the first object is in a first environment based on the judgement information, comprises:
in response to the first sub-response indicating that a connection is established between the first object and the electronic device and the second sub-response indicating that a connection is established between the first object and the at least one sensing node, determining that the first object is in the first environment and is located in an internal region corresponding to the first environment;
in response to the first sub-response indicating that a connection is established between the first object and the electronic device and the second sub-response indicating that no connection is established between the first object and the at least one sensing node, determining that the first object is in the first environment and is located in an external region corresponding to the first environment; and
in response to the first response indicating that no connection is established between the first object and the electronic device, determining that the first object is not in the first environment.

13. The operation method according to claim 12, wherein the executing an environment operation rule corresponding to the first environment comprises:
in response to the first object being in the internal region corresponding to the first environment, executing an internal operation rule corresponding to the internal region;
in response to the first object being in the external region corresponding to the first environment, executing an external operation rule corresponding to the external region;
the environment operation rule comprises the internal operation rule and the external operation rule, and the internal operation rule and the external operation rule are at least partially different.

14. The operation method according to any one of claims 1 to 13, wherein a working mode of a control element corresponding to the first object is a contactless operation mode,
the control element corresponds to at least one working region, and the contactless operation mode comprises at least one sensing operation corresponding to the at least one working region one by one;
the executing an environment operation rule corresponding to the first environment, comprises:
controlling the at least one sensing operation and/or a range of the at least one working region.

15. The operation method according to claim 14, wherein the at least one working region comprises a first working region, and the at least one sensing operation comprises a first sensing operation corresponding to the first working region,
the controlling the at least one sensing operation and/or a range of the at least one working region, comprises:
narrowing the range of the first working region and/or turning off the first sensing operation.

16. The operation method according to claim 15, wherein the at least one working region further comprises a second working region, and the at least one sensing operation comprises a second sensing operation corresponding to the second working region,
a maximum distance between the first working region and the first object is a first distance, a maximum distance between the second working region and the first object is a second distance, and the first distance is less than the second distance,
the controlling the at least one sensing operation and/or a range of the at least one working region, further comprises:
narrowing the range of the second working region and/or turning off the second sensing operation.

17. The operation method according to claim 15 or 16, wherein the at least one working region further comprises a third working region, and the at least one sensing operation comprises a third sensing operation corresponding to the third working region,
a maximum distance between the first working region and the first object is a first distance, a maximum distance between the third working region and the first object is a third distance, and the first distance is greater than the third distance,
the controlling the at least one sensing operation and/or a range of the at least one working region, further comprises:
narrowing the range of the third working region and/or turning off the third sensing operation.

18. The operation method according to any one of claims 1 to 17, wherein the first object comprises a vehicle provided with an object communication module.

19. The operation method according to any one of claims 1 to 17, wherein the first environment comprises at least one of: a home environment, an office environment, and a camping environment.

20. The operation method according to any one of claims 1 to 17, further comprising:
matching the first object and the first environment before acquiring the judgement information.

21. The operation method according to claim 1, wherein an environment communication module is provided in the first environment,
the acquiring judgement information comprises:
receiving a second request sent by the environment communication module;
generating and sending a second response to the environment communication module based on the second request; and
acquiring the judgement information sent by the environment communication module based on the second response.

22. An operation method, applied to a second object, wherein the second object is located in a first environment,
the operation method comprises:
receiving a first request sent by a first object;
based on the first request, generating and sending a first response to the first object such that the first object judges whether the first object is in the first environment based on the first response, and in response to the first object being in the first environment, the first object executes an environment operation rule corresponding to the first environment.

23. An operation method, applied to a first object and a second object, wherein the second object is located in a first environment,
the operation method comprises:
the first object sending a first request to the second object;
based on the first request, the second object generating and sending a first response to the first object;
the first object judging whether the first object is in the first environment based on the first response, and in response to the first object being in the first environment, the first object executing an environment operation rule corresponding to the first environment.

24. An operation apparatus, comprising:
a memory, for storing computer-readable instructions in a non-transitory manner; and
a processor, for running the computer-readable instructions,
wherein when the computer-readable instructions are run by the processor, the operation method according to any one of claims 1 to 23 is executed.

25. A computer-readable storage medium, storing computer-readable instructions in a non-transitory manner,
wherein the computer-readable instructions, when executed by a computer, cause the computer to perform the operation method according to any one of claims 1 to 23.
